# NEW EUROPEAN PATENT SPECIFICATION

(11) **EP 1 431 538 B2**
(45) Date of publication and mention of the opposition decision: **05.08.2009**
(45) Mention of the grant of the patent: 26.10.2005
(21) Application number: 02258929.5
(22) Date of filing: 20.12.2002
(51) Int. Cl.: F01N 7/18, F16L 27/111

(54) **Flexible coupling member for exhaust lines**
Flexibles Leitungselement für Abgasleitungen
Accouplement d'échappement flexible

(43) Date of publication of application: 23.06.2004
(73) Proprietor: Senior Flexonics Automotive Limited, Crumlin, Gwent NP1 4HY (GB)
(72) Inventor: Thole, Anthony, Gwent NP1 4HY (GB); Penny, Charles, Gwent NP1 4HY (GB)
(74) Representative: Franks, Robert Benjamin

(56) References cited:
- EP-A1- 0 234 706
- JP-U- 2 103 119
- US-A- 5 456 291
- US-A- 6 062 268
- US-A- 6 062 268
- US-B1- 6 220 023
- US-B1- 6 220 023
- PATENT ABSTRACTS OF JAPAN vol. 1996, no. 03, 29 March 1996 (1996-03-29) & JP 07 310538 A (FUTABA SANGYO KK), 28 November 1995 (1995-11-28)
- PATENT ABSTRACTS OF JAPAN vol. 1996, no. 09, 30 September 1996 (1996-09-30) & JP 08 121658 A (CALSONIC CORP), 17 May 1996 (1996-05-17)

## Description

### Field of the Invention

The present invention relates to flexible couplings for a motor vehicle exhaust system.

### Background to the Invention

A known exhaust flexible coupling consists of a corrugated metallic bellows-shaped member covered by a woven metallic braid casing. The purpose of the bellows is to allow a flexible gas tight coupling between the front of an exhaust system attached to a vehicle engine, and the rear of the exhaust system, which is suspended from a body of the vehicle. The flexible coupling must allow large engine rock or pitch to be de-coupled, particularly for front wheel drive vehicles with transverse engine arrangements. Engine vibrations caused by the firing of the pistons also need to be de-coupled from the rear of the exhaust system.

The outer woven metal braid casing has many functions. Firstly, it provides protection for the bellows member from the external environment eg. rock salt and stone chips. Secondly, contact between the braid and the bellows also provides frictional dampening of vibrations which could otherwise cause the bellows to resonate. In addition, the braid prevents the bellows from extending beyond a particular length thereby providing a limit to its allowable motion in an axial direction.

In the known exhaust coupler, the woven metal braid casing is made slightly larger and longer than the external dimensions of the bellows. As the bellows extends, the braid contracts in diameter until contact is made with the bellows surface. Beyond this point no further contraction is possible and further loading is supported to an increasing extent by the braid, this situation being referred to as "lockout".

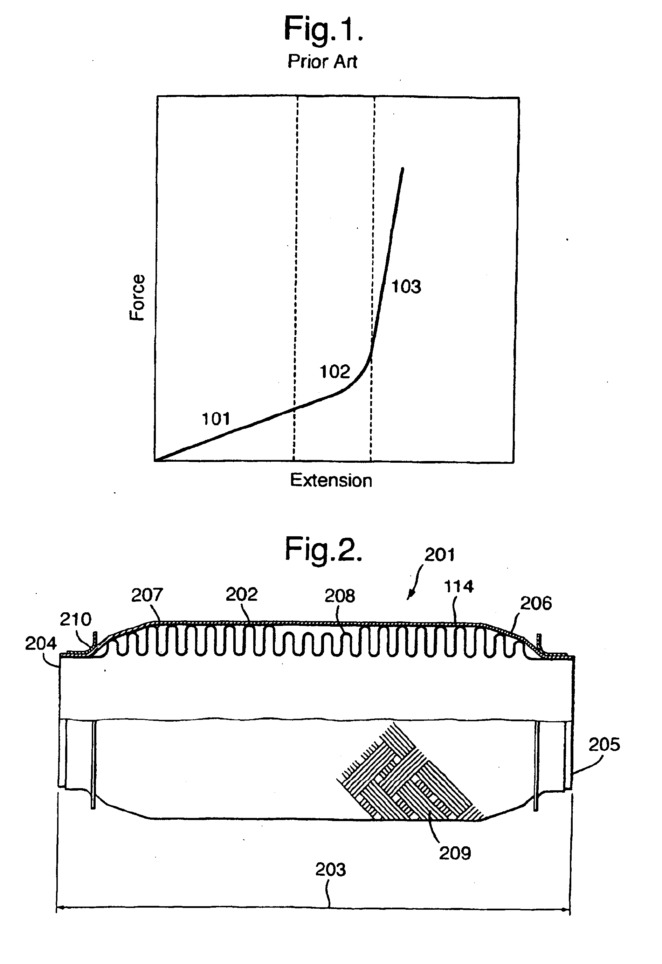

Referring to Fig. 1 herein there is shown in graphical form, a relationship between an axial force acting upon a prior art flexible coupling member as a function of the extension of the prior art flexible coupling member. In a first section 101 of this graph increasing extension is translated into increasing force in a substantially linear fashion. This portion of the graph represents the behavior of the prior art flexible coupling before contact is established between the metallic bellows shaped member and outer woven metal casing member of the prior art coupler. The relationship between force and extension for the prior art flexible tubular coupling member then undergoes a period of rapid substantially exponential change as shown in section 102 of the graph, representing the outer woven metal casing becoming increasingly in contact with the metallic bellows shaped member. In a third state, shown graphically as section 103, represents a conventional flexible coupling in a state of lockout. Once the state of lockout is achieved the relationship between extension of the coupling and the forces acting thereupon per unit force becomes linear with a typically steep gradient, i.e. relatively low extension per unit force.

Two major problems arise for known flexible couplings when the state of lockout occurs:
1) Under static or pseudo static loading, since it cannot extend significantly beyond that lockout point, the flexible coupling pulls the rear of the exhaust system against its supporting rubber mounts. Under dynamic load conditions, as lockout is reached the flexible coupling's rigidity changes rapidly. The rear of the exhaust system then undergoes a rapid acceleration, which creates inertial loads. As the braid tightens against the bellows, large loads are transferred onto end corrugations of the flexible bellows member. As well as creating large strains in the bellows shaped member, the large loads also have the potential of inducing strains in the overall exhaust system.
2) At lockout, since the flexible coupling's rigidity increases rapidly, it becomes far less effective at de-coupling engine vibrations. This situation causes increased wear and/or fatigue damage on the components of the exhaust system.

In US 6,062,268 there is disclosed a tube element for an exhaust having a metallic bellows shaped member with an outer woven casing joined to the bellows member at each end of the bellows, the bellows member having a plurality of corrugations along its length. The outer woven casing has a vibration damping effect on the bellows.

It is an object of the present invention to provide a flexible coupling which is capable of improved performance by overcoming the lockout problems associated with prior art flexible couplings.

### Summary of the Invention

According to the invention there is provided a flexible tubular casing as claimed in claim 1.

Said outer woven metal casing member (209) may be substantially attached at said metallic bellows shaped member's first and second ends by crimping between outer collars (210) and said metallic bellows shaped member's first and second ends (204, 205).

Said outer woven metal casing member (209) may be substantially attached at said metallic bellows shaped member's first and second ends (204, 205) by welding of said outer woven metal covering member to said metallic bellows shaped member first and second ends.

Preferably, said outer woven metal casing member is substantially attached at said metallic bellows shaped member first and second ends by a combination of the following:
by crimping between outer collars (210) and said metallic bellows shaped member first and second ends;
by welding of said outer woven metal casing member (209) to said metallic bellows shaped member first and second ends.

Preferably, said metallic bellows shaped member (202, 500) comprises austenitic stainless steel.

Preferably said metallic bellows shaped member (202, 500) comprises austenitic stainless steel of any one of the following types:
BS EN 1.4301;
BS EN 1.4306
BS EN 1.4401;
BS EN 1.4404;
BS EN 1.4571;
BS EN 1.4541;
BS EN 1.4828.

Alternatively, said metallic bellows shaped member (202, 500) may comprise nickel based stainless steel alloys.

Said metallic bellows shaped member (202, 500) may comprise high nickel steel alloys of any one of the following types:
UNS N 08800;
UNS N 06600;
UNS N 06625;
UNS S 35135.

Preferably, said outer woven metal casing member (209) comprises austenitic stainless steel of any one of the following types:
BS EN 1.4301;
BS EN 1.4306
BS EN 1.4401;
BS EN 1.4404;
BS EN 1.4571;
BS EN 1.4541
BS EN 1.4828.

Preferably, said metallic bellows shaped member (202, 500) comprises a plurality of plies in the range 1 to 4.

Preferably, each ply is of a thickness between 0.15 to 0.40mm.

Preferably, said outer woven metal casing member comprises a number of braids, wherein each braid member comprises 45 to 50 band members of helically interwoven wire, and each band member comprises 3 to 12 individual wire strands, and each wire strand has a diameter in the range 0.2 to 0.5mm.

Preferably, said braid members form an angle of 45° to 75° relative to said length of said metallic bellows shaped member.

The flexible tubular coupling member may further comprise, a helically coiled metal liner member (505), internal to the metallic bellows shaped member, and fixed in this position.

Preferably, said helically coiled metal liner member (505) comprises austenitic stainless steel of anyone of the following types:
BS EN 1.4301;
BS EN 1.4306;
BS EN 1.4401;
BS EN 1.4404;
BS EN 1.4571;
BS EN 1.4541;
BS EN 1.4828.

Said helically coiled metal liner member (505) may be fixed in position by attachment at the metallic bellows shaped member's first and second ends by welding to intermediate adapter tubes (503, 504) which are then attached by crimping to said metallic bellows shaped member's first and second ends (204, 205), outer collars (210) and outer woven metal casing member (209).

Said helically coiled metal liner member may be fixed in position by attachment at the metallic bellows shaped member first and second ends by direct crimping between outer collars, said metallic bellows shaped member first and second ends and said outer woven metal casing member.

Preferably, said helically coiled metal liner member is fixed in position by a combination of the following:
by welding to intermediate adapter tubes (503, 504) which are then attached by crimping to said metallic bellows shaped member first and second ends (204, 205), said outer woven metal casing member (209) and outer collars (210);
by direct crimping between said outer collars (210), said metallic bellows shaped member first and second ends (204, 205) and said outer woven metal casing member (209).

Said said outer collars (210) may comprise austenitic stainless steel of any one of the following types:
BS EN 1.4301
BS EN 1.4306
BS EN 1.4401
BS EN 1.4404;
BS EN 1.4571;
BS EN 1.4541;
BS EN 1.4828.

Preferably, said outer collars (210) comprise ferritic stainless steel.

Preferably, at least one said reduced outer diameter corrugation is positioned at said metallic bellows shaped member first or second ends (204, 205) in addition to along said length.

Preferably, said flexible tubular coupling comprises a region of said bellows having a set of corrugations (208) of a relatively lower outer dimension, said region being disposed between a pair of regions of said bellows each having corrugations (207) of a relatively greater outer dimension.

Preferably, under conditions of variable loading, said outer woven metal casing member (209) operates to move in and out of contact with a surface of said corrugations of relatively lower external dimension.

Preferably, said bellows member comprises:a plurality of substantially angular comugations arranged along a length of said bellows member, said corrugations arranged into:
a first set of corrugations, of relatively larger outer diameter;
a second set of corrugations of relatively reduced outer diameters;
a third set of said corrugations, of relatively larger outer diameter,
wherein said second set of corrugations of relatively reduced diameter lie between said first and third sets of corrugations of relatively larger outer diameter.

Preferably, the flexible tubular coupling member is operable such that under a first level of tension, said outer sleeve constricts around said first and third sets of corrugations, having a relatively larger diameter, whilst leaving a gap between said second set of corrugations and said outer sleeve member.

Preferably, the flexible tubular coupling member is operable such that under a second level of tension, said outer sleeve constricts around said first and third sets of corrugations of relatively larger dimensions; and
said outer sleeve further constricts to an inside dimension which is less than said outer dimension of said first and/or third sets of corrugations of relatively larger outer dimension.

Said flexible tubular coupling member may be operable, such that under said second tension condition, said outer sleeve constricts around said second set of corrugations of relatively reduced outer dimension, such that there is contact between an inner surface of said outer sleeve, and an outer surface of said second set of corrugations of relatively reduced outer dimension.

The flexible tubular coupling member may be operable such that:
under a first range (401) of load applied along a main length of said exhaust coupler, said exhaust coupler extends at a first rate of extension;
under a second range (402) of load which is higher than said first range of load, said exhaust coupler extends at a second rate of extension, said second rate of extension reduced from said first rate of extension; and
under a third range (403) of load, higher than said first or second ranges of load, said coupler extends at a third rate of extension, said third rate of extension being lower than said first or second rates of extension.

A rate of change of said second rate of extension may be between said first rate of extension and said third rate of extension, and may provide a gradually decreasing rate of extension which is smoothly graded up until a lockout condition.

According to another aspect there is provide an internal combustion engine, comprising a flexible tubular coupling member according to the aspect set out above.

Other aspects according to the present invention are as defined in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 shows a graph showing a relationship between an extension of bellows-shaped member and the forces acting upon it for a prior art flexible coupling;
Fig. 2 shows a schematic and cut through representation of a novel flexible coupling according to a specific embodiment of the present invention in which a bellows-shaped member and a braid covering are in a state of soft lockout;
Fig. 3 shows a schematic and cut through representation of the flexible coupling of Fig. 2, in which the bellows-shaped member and braid covering are in a state of full lockout;
Fig. 4 shows a graph showing a relationship between extension of the bellows-shaped member and forces acting upon it for a flexible coupling as described with reference to Figs 2 and 3 herein;
Fig. 5 shows a schematic and cut away representation of a second flexible coupling according to a second specific embodiment of the present invention, under a first condition of loading;
Fig. 6 shows a schematic and cut away representation of the second flexible coupling under a second condition of loading; and
Fig. 7 shows a schematic and cut away representation of the second exhaust coupler, under conditions of high loading, in which a lockout state occurs.

### Detailed Description of the Best Mode for Carrying Out the Invention

There will now be described by way of example a specific mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In a first specific embodiment of the invention, a flexible tubular coupling comprises a metallic bellows shaped member having a plurality of corrugations, wherein a region of said corrugations has a substantially reduced external dimension, said region being disposed between regions of said bellows having a greater outer dimension; and an outer tubular sleeve member which, under tension is capable of contracting around said bellows member, so as to closely fit around the region of reduced dimension corrugations, and around the region of relatively greater external dimension corrugations.

Referring to Fig. 2 herein, a first flexible tubular exhaust coupling 201 comprises a tubular metallic bellows shaped member 202, the metallic bellows shaped member 202 having a length 203, and first and second ends 204 and 205. The metal bellows member comprises a plurality of corrugations (206, 207 and 208) extending along a portion of its length. The corrugations of the metallic bellows shaped member vary in diameter along the length of the member. The corrugations 206 are of a reduced height at the ends, relative to those corrugations 207 which predominate along the length of the metallic bellows shaped member. Additionally, there are also corrugations 208 of reduced outer dimension in a middle portion of the length of the metallic bellows shaped member.

The corrugations of the metallic bellows shaped member allow the member to extend and contract in response to forces acting upon the member originating normally from the internal combustion engine or rear end of the exhaust system to which the metallic bellows shaped member is permanently attached in use. The corrugations of reduced outer dimension present at the ends of the metallic bellows shaped member 206 are so reduced to decrease detrimental effects of force loading upon the metallic bellows shaped member once lockout has begun.

The flexible tubular coupling member further comprises a woven metal casing member 209, this outer woven metal casing member encloses the metallic bellows shaped member 202 and is fixed in this position by crimping between an outer collar 210 and the metallic bellows shaped member connection end 204. The other end 205 of the bellows is similarly fixed.

As can be seen from Fig. 2 herein, under a first stage of loading, the outer woven metal casing 209 comes to lie in contact with the corrugations 206 and 207 this state being termed "soft lockout".

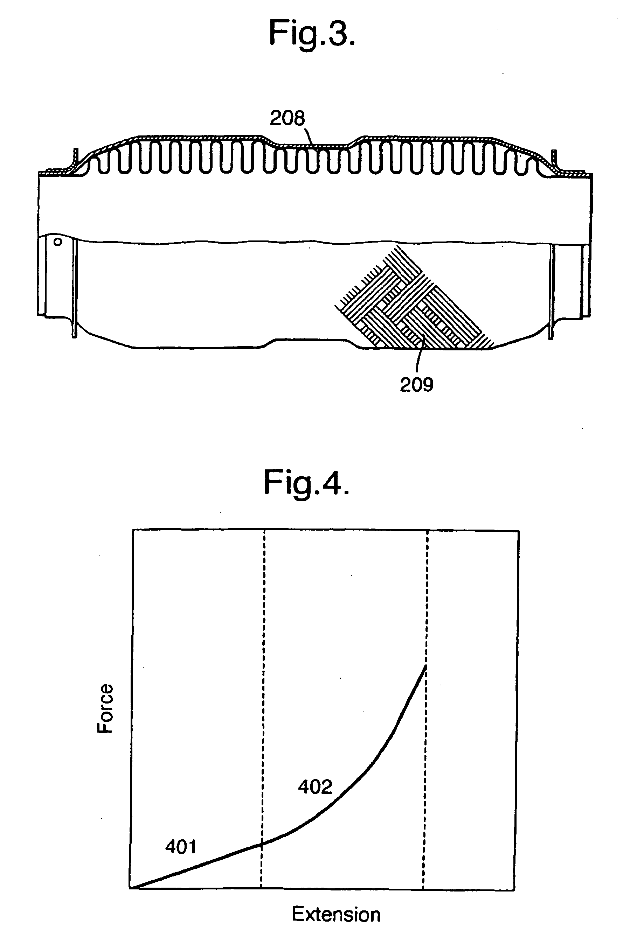

Referring to Fig. 3 herein, there is illustrated schematically in cut away view, the first coupling under conditions of a second loading, which causes outer woven metal casing 209 to contract and constrict in a direction radially inwardly, towards a main central longitudinal axis of the exhaust coupling wherein an extent of constriction of the outer casing which coincides with a region of the bellows having corrugations of relatively reduced diameter, is greater than an extent of constriction of the same metal casing, in regions which coincide with regions of the bellows which have corrugations of a relatively larger outer diameter. In other words, because there is a corrugated region of the bellows member in which the corrugations have relatively larger outer diameter, and a region of the bellows member in which there are corrugations of a relatively reduced outer diameter, the outer metal casing is able, under conditions of high axial tension loading, to constrict around the bellows region having relatively reduced diameter corrugations, as well as to constrict around the regions of the bellows member having corrugations of relatively increased outer diameter. Under conditions of high loading, and at a level of loading which is less than a level at which the component will fail, that is, at lockout but before catastrophic failure, the outer metal casing may closely follow the outer surfaces of the substantially annular corrugations, in regions both of relatively higher outer corrugation diameter, and in the region of relatively lower annular corrugation outer diameter, such that the whole exhaust coupler, under conditions of high loading, becomes effectively rigid.

If additional force beyond the first state of loading is applied to said flexible tubular coupling member the coupling still has the capacity to dissipate the force. In this instance the outer woven metal casing 209 will increasingly become dipped over the region of reduced height corrugations 208 until finally the outer woven metal casing will be in direct contact with these reduced corrugations and a state of full lockout will be achieved.

In this way, the gradient of a curve plotting the relationship between extension of the flexible coupling and the force in acting there upon changes much more gradually for this novel type of flexible tubular coupling member than for an equivalent prior art coupling.

Referring to Fig. 4 herein, there is illustrated schematically a graph showing on one axis extension and on another axis, applied tension force in a direction axially of the coupling. Once contact between the outer metal casing member and the metallic bellows shaped member begins to occur, the relationship between increasing extension and the forces acting upon the flexible coupling member become approximately exponential in nature. However, as can be seen by comparison with Fig.1 the rate of change of increasing extension with increasing force for the first coupling is less than that of an equivalent prior art flexible tubular coupling member. In a state of "soft lockout" as shown in loading region 401, the coupling dissipates forces due to engine vibration and engine movement relative to the vehicle.

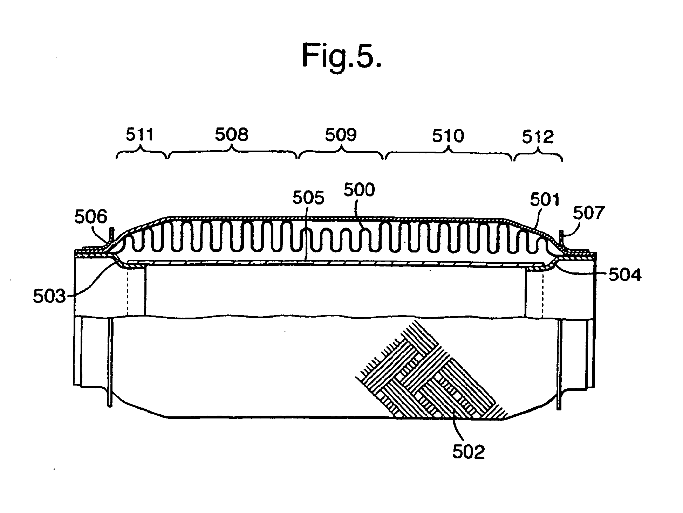

Referring to Fig. 5 herein, there is illustrated schematically in partial cut away view, from one side, a second exhaust coupling according to a second specific embodiment of the present invention. The second flexible tubular coupling is substantially as described previously with reference to Figs. 2 - 4 and further comprises a helically coiled metal liner member. In this embodiment said helically coiled metal liner member is fixed internally to the bellows shaped member by means of welding to a pair of intermediate adapter tubes which are attached by crimping to the bellows shaped member connection ends, outer collars and woven casing member.

The second exhaust coupler comprises: a tubular bellows member 500, having a plurality of substantially annular corrugations 501; an outer woven wire mesh sleeve 502, which fits around an outside of the bellows 500 and fits closely there to; a first adapter tube 503 fitted inside a first end of the bellows; a second adapter tube 504 fitted internally of a second end of the bellows; a helically coiled metal liner tube 505 fitting outside the first and second adapter tubes, and extending along a main central axis of the exhaust coupler inside the bellows member; a first outer collar 506 extending circumferentially around an outer surface of a first end of the bellows member; and a second outer collar 507 extending circumferentially around an outer surface of a second end of the bellows member 500.

The bellows member comprises a plurality of substantially annular corrugations, extending between the first end of the bellows and the second end of the bellows, the plurality of corrugations extending along a length of the bellows.

The annular corrugations are formed into sets, wherein a first set of corrugations 508 comprises a plurality of corrugations each having a relatively larger outer diameter; a second set of corrugations 509 each having a relatively reduced outer diameter; and a third set of corrugations 510, each having a relatively larger outer diameter, of similar or identical outer diameter to the first set.

In addition to the first, second and third sets of corrugations, there are additionally provided between the first set of corrugations and the first end of the bellows, a fourth set of corrugations 511 comprising one or a plurality of individual corrugations, of relatively reduced outer diameter compared to the outer diameter of those corrugations of the first set; and similarly, at a second end of the bellows, a fifth set of corrugations, having relatively reduced outer dimension compared to the corrugations of relatively higher outside dimension, the fifth set of corrugations being provided between the third set of corrugations and the second end of the bellows member.

The function of the fourth and fifth sets of corrugations, is to provide a tapering outer surface region between a main body of the first set of corrugations and the first end of the bellows, and correspondingly a tapering region between the third set of corrugations and the second end of the bellows, so that the outer sleeve 501 is able to taper at either end of the coupler.

The second exhaust coupling shown in Fig. 5 herein, is shown under conditions of loading within a first loading state. In the first load state, there is between zero loading, i.e. no tension force applied in a direction axially along a main length of the coupling, up to a load condition where the bellows and coupling in general is being extended in a axial direction, and the outer sleeve 501 is in contact with the corrugations in the first, third, fourth and fifth regions of the bellows, but does not contact an outer surface of the corrugations in the second region relatively reduced diameter corrugations of the bellows. That is, the outer sleeve does not contact the outer surface of the corrugations having relatively reduced outer dimension, in the second region of the bellows, but does contact the outer surfaces of the regions having relatively larger diameter. During this loading condition, the bellows retains some flexibility, and is able to damp mid-frequency vibrations due to piston movement of an internal combustion engine, that is, frequencies typically in the range up to 8 kHz. Further, the coupler is capable of absorbing movement in an axial direction, as well as movement of the two ends of the coupler in a shear direction, that is, having a component of force in a direction transverse to a main axial length of the coupler.

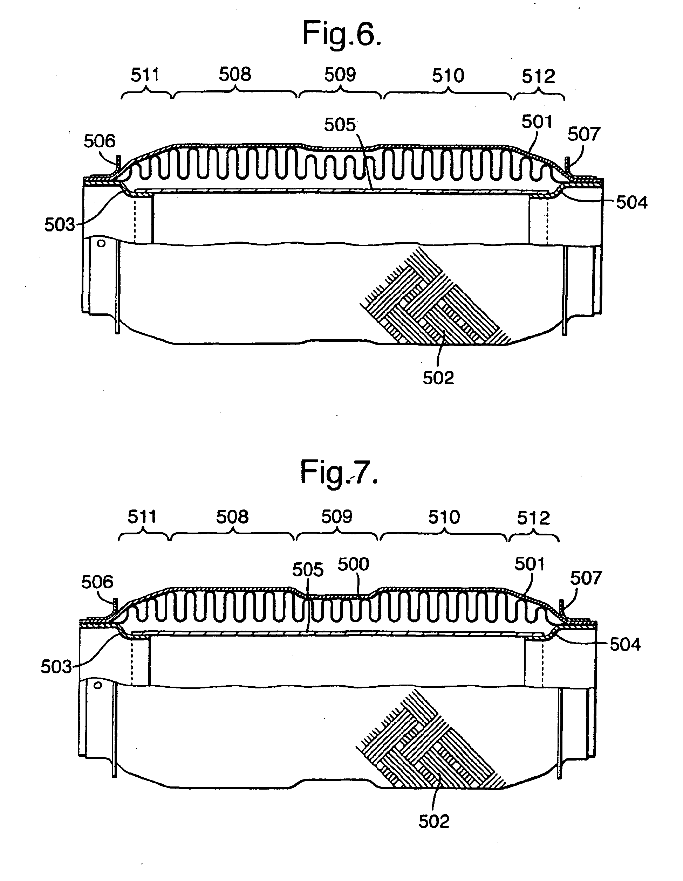

Referring to Fig. 6 herein, there is illustrated schematically the second coupler as referred to in Fig. 5 herein, under a second loading condition. In the second loading condition, the coupling is stretched in a direction axially along a main length of the coupling, to an extent in which a portion of the outer sleeve which corresponds to the second bellows region having relatively reduced diameter corrugations, constricts inwardly towards the centre of the coupling, and towards an outer surface of the bellows in the second region of relatively reduced outer diameter corrugations, but does not actually touch the outer surface of the relatively reduced diameter corrugations. A gap remains between an inner surface of the outer sleeve, and an outer surface of the second bellows region. Since tension is maintained along a length of the sleeve, the sleeve being rigidly held by the first and second collars, at each end of the bellows respectively, an inner surface of the outer sleeve remains in contact with the first, third, fourth and fifth regions of the bellows member, i.e. that is, remains in contact with the relatively larger outer diameter corrugations, and the reduced diameter corrugations at either end of the bellows, but not in contact with the reduced diameter corrugations in the second bellows region, in the center of the coupler.

As further tension is applied to the coupler, the coupler extends further in the axial direction, and both the bellows and the sleeve and the inner helical liner extend axially.

The second loading condition as described in Fig. 6 herein, corresponds to the second region 402 in the graph shown in Fig. 4.

Referring to Fig. 7 herein, there is illustrated schematically in partial cut away view, the second exhaust coupler under conditions of high tension loading in the axial direction. In this state, the bellows, helical liner and outer sleeve are each extended, and the outer sleeve has contracted around the outer surface of the bellows member, such that the sleeve contacts all, or most of the annular corrugations. The sleeve constricts around any annular corrugations of reduced diameter, thereby being constricted in towards the center of the coupler, and contacting substantially each annular corrugation. Under these conditions, the component experiences "lockout" in which the rigidity of the component increases markedly, and the rate of extension of the coupler to further loading is substantially linear. Under conditions of lockout, the rate of extension of the coupler to further axial loading, placing the coupler under tension, is substantially linear, and at a lower rate, i.e. a lower extension per unit force, than in the first loading condition, in which the outer sleeve does not contact the corrugations in the second region, i.e. does not contact the relatively reduced diameter corrugations.

The conditions shown in Fig. 7 herein corresponding to full constriction of the sleeve around the bellows, corresponds to the third region 403 in the graph of Fig. 4, in which lockout occurs.

## Claims

1. A flexible tubular coupling member for an exhaust systems for a motor vehicle comprising:
a metallic bellows shaped member (202, 500) having a length and a first end (204) and second end (205);
an outer woven metal casing member (209) joined to said metallic bellows shaped member substantially at said first and second ends, said outer woven metal casing member comprising a number of braid members;
a plurality of corrugations (206, 207) extending along a portion of said length of said metallic bellows shaped member;
**characterised in that** said plurality of corrugations comprises:
a first region of relatively reduced outer dimension corrugations positioned at an end of the metallic bellows shaped member;
a second region of relatively reduced outer diameter corrugations (208), said relatively reduced outer diameter corrugations being substantially perpendicular to said length of said metallic bellows shaped member;
wherein said second region of relatively reduced diameter corrugations is positioned along said length other than at said first (204) or second (205) ends;
a first region of relatively greater outer dimension corrugations;
a second region of relatively greater outer dimension corrugations;
wherein said outer woven casing, under tension is capable of contracting around said bellows member, so as to closely fit around the second region of relatively lower diameter corrugations and around the regions of relatively greater outer dimension corrugations; and
is operable such that under a first level of tension, said outer woven casing constricts around said first and second regions of corrugations having relatively greater outer dimension, whilst leaving a gap between said second region of corrugations of relatively lower diameter and said outer woven casing ; and
under a second level of tension, said outer woven casing constricts around said first and second region of corrugations of relatively greater -outer dimension and further constricts to a dimension which is less than said outer dimension of said first and/or second regions of corrugations of relatively greater outer dimension.

2. The flexible tubular coupling member as claimed in claim 1, wherein said outer woven metal casing member (209) is substantially attached at said metallic bellows shaped member's first and second ends by crimping between outer collars (210) and said metallic bellows shaped member's first and second ends (204, 205).

3. The flexible tubular coupling member as claimed in claim 1, wherein said outer woven metal casing member (209) is substantially attached at said metallic bellows shaped member's first and second ends (204, 205) by welding of said outer woven metal covering member to said metallic bellows shaped member first and second ends.

4. The flexible tubular coupling member as claimed in claim 1, wherein said outer woven metal casing member is substantially attached at said metallic bellows shaped member's first and second ends by a combination of the following:
by crimping between outer collars (210) and said metallic bellows shaped member's first and second ends;
by welding of said outer woven metal casing member (209) to said metallic bellows shaped member's first and second ends.

5. The flexible tubular coupling member as claimed in any preceding claim, wherein said metallic bellows shaped member (202, 500) comprises austenitic stainless steel.

6. The flexible tubular coupling member as claimed in any preceding claim, wherein said metallic bellows shaped member (202, 500) comprises austenitic stainless steel of any one of the following types:
BS EN 1.4301;
BS EN 1.4306;
BS EN 1.4401;
BS EN 1.4404;
BS EN 1.4571;
BS EN 1.4541;
BS EN 1.4828.

7. The flexible tubular coupling member as claimed in claims 1 to 4, wherein said metallic bellows shaped member (202, 500) comprises nickel based stainless steel alloys.

8. The flexible tubular coupling member as claimed in claim 7, wherein said metallic bellows shaped member (202, 500) comprises high nickel steel alloys of any one of the following types:
UNS N 08800;
UNS N 06600;
UNS N 06625;
UNS S 35135.

9. The flexible tubular coupling member as claimed in any preceding claim, wherein said outer woven metal casing member (209) comprises austenitic stainless steel of any one of the following types:
BS EN 1.4301;
BS EN 1.4306;
BS EN 1.4401;
BS EN 1.404;
BS EN 1.4571;
BS EN 1.4541;
BS EN 1.4828.

10. The flexible tubular coupling member as claimed in any preceding claim, wherein said metallic bellows shaped member (202, 500) comprises a plurality of plies in the range 1 to 4.

11. The flexible tubular coupling member as claimed in claim 7, wherein each ply is of a thickness between 0.15 to 0.40mm.

12. The flexible tubular coupling member as claimed in any preceding claim, wherein each braid member comprises 45 to 50 band members of helically interwoven wire.

13. The flexible tubular coupling member as claimed in claim 12, wherein each band member comprises 3 to 12 individual wire strands.

14. The flexible tubular coupling member as claimed in claim 13, wherein each wire strand has a diameter in the range 0.2 to 0.5mm.

15. The flexible tubular coupling member as claimed in any preceding claim, wherein said braid members form an angle of 45° to 75° relative to said length of said metallic bellows shaped member.

16. The flexible tubular coupling member as claimed in any preceding claim further comprising, a helically coiled metal liner member (505), internal to the metallic bellows shaped member and fixed in this position.

17. The flexible tubular coupling member as claimed in claim 16, wherein said helically coiled metal liner member (505) comprises austenitic stainless steel of anyone of the following types:
BS EN 1.4301;
BS EN 1.4306;
BS EN 1.4401;
BS EN 1.4404;
BS EN 1.4571;
BS EN 1.4541;
BS EN 1.4828.

18. The flexible tubular coupling member as claimed in claim 16 or 17, wherein said helically coiled metal liner member (505) is fixed in position by attachment at the metallic bellows shaped member's first and second ends by welding to intermediate adapter tubes (503, 504) which are then attached by crimping to said metallic bellows shaped member's first and second ends (204, 205), outer collars (210) and outer woven metal casing member (209).

19. The flexible tubular coupling member as claimed in claim 16 or 17, wherein said helically coiled metal liner member is fixed in position by attachment at the metallic bellows shaped member first and second ends by direct crimping between outer collars, said metallic bellows shaped member first and second ends and said outer woven metal casing member.

20. The flexible tubular coupling member as claimed in claim 16 or 17, wherein said helically coiled metal liner member is fixed in position by a combination of the following:
by welding to intermediate adapter tubes (503, 504) which are then attached by crimping to said metallic bellows shaped member first and second ends (204, 205), said outer woven metal casing member (209) and outer collars (210);
by direct crimping between said outer collars (210), said metallic bellows shaped member first and second ends (204, 205) and said outer woven metal casing member (209).

21. The flexible tubular coupling member as claimed in any preceding claim, wherein said outer collars (210) comprise austenitic stainless steel of any one of the following types:
BS EN 1.4301;
BS EN 1.4306;
BS EN 1.4401;
BS EN 1.4404;
BS EN 1.4571;
BS EN 1.4541;
BS EN 1.4828.

22. The flexible tubular coupling member as claimed in any preceding claim, wherein said outer collars (210) comprise ferritic stainless steel.

23. The flexible tubular coupling member as claimed in any one of the preceding claims comprising a region of said bellows having a region of corrugations (208) of a relatively lower outer diameter-, said region being disposed between said pair of regions of said bellows each having corrugations (207) of a relatively greater outer dimension.

24. The flexible tubular coupling member as claimed in claim 23, wherein under conditions of variable loading, said outer woven metal casing member (209) operates to move in and out of contact with a surface of said corrugations of relatively lower outer diameter.

25. The flexible tubular coupling as claimed in claim 23 or 24, wherein said bellows member comprises a plurality of substantially annular corrugations.

26. The flexible tubular coupling member as claimed in anyone of claims 23-25, operable, such that under said second tension condition, said outer sleeve constricts around said second set of corrugations of relatively reduced outer diameter, such that there is contact between an inner surface of said outer sleeve, and an outer surface of said second set of corrugations of relatively reduced outer diameter.

27. The flexible tubular coupling member as claimed in any one of the preceding claims **characterized in that** said exhaust coupler is operable such that:
under a first range (401) of load applied along a main length of said exhaust coupler, said exhaust coupler extends at a first rate of extension;
under a second range (402) of load which is higher than said first range of load, said exhaust coupler extends at a second rate of extension, said second rate of extension reduced from said first rate of extension; and
under a third range (403) of load, higher than said first or second ranges of load, said coupler extends at a third rate of extension, said third rate of extension being lower than said first or second rates of extension.

28. The flexible tubular coupling member as claimed in claim 27, wherein a rate of change of said second rate of extension is between said first rate of extension and said second rate of extension, and provides a gradually decreasing rate of extension which is smoothly graded up until a lockout condition.

29. An internal combustion engine, comprising a flexible tubular coupling member as claimed in any one of the preceding claims.

## Patentansprüche

1. Flexibles Rohrkupplungselement für eine Auspuffanlage für ein Kraftfahrzeug, das Folgendes umfasst:
ein metallisches balgförmiges Element (202, 500) mit einer Länge und einem ersten Ende (204) und einem zweiten Ende (205);
ein äußeres Gehäuseelement aus Metallgewebe (209), das mit dem metallischen balgförmigen Element im Wesentlichen an dessen ersten und an dessen zweiten Ende verbunden ist, wobei das äußere Gehäuseelement aus Metallgewebe eine Reihe von Strangelementen umfasst;
eine Vielheit von Wellen (206, 207), die sich entlang einem Teil der Länge des metallischen balgförmigen Elements erstrecken;
**dadurch gekennzeichnet, dass** die Vielheit von Wellen Folgendes umfasst:
eine an einem Ende des metallischen balgförmigen Elements angeordnete erste Region von Wellen mit relativ reduziertem Außenmaß;
eine zweite Region von Wellen mit relativ reduziertem Außendurchmesser (208), wobei die Wellen mit relativ reduziertem Außendurchmesser im Wesentlichen senkrecht zur Länge des metallischen balgförmigen Elements sind;
wobei die zweite Region von Wellen mit relativ reduziertem Durchmesser an einem anderen Ort als am ersten (204) oder zweiten (205) Ende entlang der Länge angeordnet ist;
eine erste Region von Wellen mit relativ größerem Außenmaß;
eine zweite Region von Wellen mit relativ größerem Außenmaß;
wobei das äußere gewobene Gehäuse unter Spannung in der Lage ist, sich um das Balgelement zusammenzuziehen, um eng um die zweite Region von Wellen mit relativ kleinerem Durchmesser und um die Regionen von Wellen mit relativ größerem Außenmaß zu passen; und
so wirkt, dass sich unter einem ersten Spannungsniveau das äußere gewebte Gehäuse um die erste und die zweite Region von Wellen mit relativ größerem Außenmaß verengt und einen Spalt zwischen der zweiten Region von Wellen mit relativ kleinerem Durchmesser und dem äußeren gewobenen Gehäuse lässt; und
unter einem zweiten Spannungsniveau sich das äußere gewebte Gehäuse um die erste und die zweite Region von Wellen mit relativ größerem Außenmaß verengt und sich weiter auf ein Maß verengt, das kleiner ist als das Außenmaß der ersten und/oder der zweiten Region von Wellen mit relativ größerem Außenmaß.

2. Flexibles Rohrkupplungselement nach Anspruch 1, wobei das äußere Gehäuseelement aus Metallgewebe (209) im Wesentlichen durch Bördeln zwischen den äußeren Bunden (210) und dem ersten und zweiten Ende (204, 205) des metallischen balgförmigen Elements am ersten und am zweiten Ende des metallischen balgförmigen Elements befestigt ist.

3. Flexibles Rohrkupplungselement nach Anspruch 1, wobei das äußere Gehäuseelement aus Metallgewebe (209) im Wesentlichen durch Schweißen des äußeren Abdeckelements aus Metallgewebe an das erste und zweite Ende des metallischen balgförmigen Elements am ersten und am zweiten Ende (204, 205) des metallischen balgförmigen Elements befestigt ist.

4. Flexibles Rohrkupplungselement nach Anspruch 1, wobei das äußere Gehäuseelement aus Metallgewebe im Wesentlichen durch eine Kombination der Folgenden am ersten und zweiten Ende des metallischen balgförmigen Elements befestigt ist:
durch Bördeln zwischen den äußeren Bunden (210) und dem ersten und zweiten Ende des metallischen balgförmigen Elements;
durch Schweißen des äußeren Gehäuseelements aus Metallgewebe (209) an das erste und zweite Ende des metallischen balgförmigen Elements.

5. Flexibles Rohrkupplungselement nach einem der vorangehenden Ansprüche, wobei das metallische balgförmige Element (202, 500) austenitischen Edelstahl umfasst.

6. Flexibles Rohrkupplungselement nach einem der vorangehenden Ansprüche, wobei das metallische balgförmige Element (202, 500) austenitischen Edelstahl eines der folgenden Typen umfasst:
BS EN 1.4301;
BS EN 1.4306;
BS EN 1.4401;
BS EN 1.4404;
BS EN 1.4571;
BS EN 14541;
BS EN 14828.

7. Flexibles Rohrkupplungselement nach Ansprüchen 1 bis 4, wobei das metallische balgförmige Element (202, 500) Edelstahllegierungen auf Nickelbasis umfasst.

8. Flexibles Rohrkupplungselement nach Anspruch 7, wobei das metallische balgförmige Element (202, 500) Edelstahllegierungen mit hohem Nickelgehalt eines der folgenden Typen umfasst:
UNS N 08800;
UNS N 06600;
UNS N 06625;
UNS S 35135.

9. Flexibles Rohrkupplungselement nach einem der vorangehenden Ansprüche, wobei das äußere Gehäuseelement aus Metallgewebe (209) austenitischen Edelstahl eines der folgenden Typen umfasst:
BS EN 1.4301;
BS EN 1.4306;
BS EN 1.4401;
|BS EN 1.404;
BS EN 1.4571;
BS EN 1.4541;
BS EN 1.4828.

10. Flexibles Rohrkupplungselement nach einem der vorangehenden Ansprüche, wobei das metallische balgförmige Element (202, 500) eine Vielheit von Lagen im Bereich von 1 bis 4 umfasst:

11. Flexibles Rohrkupplungselement nach Anspruch 7, wobei jede Lage eine Dicke zwischen 0,15 und 0,40 mm aufweist.

12. Flexibles Rohrkupplungselement nach einem der vorangehenden Ansprüche, wobei jedes Strangelement 45 bis 50 Bandelemente aus spiralförmig verwebtem Draht umfasst.

13. Flexibles Rohrkupplungselement nach Anspruch 12, wobei jedes Bandelement 3 bis 12 einzelne Drahtlitzen umfasst.

14. Flexibles Rohrkupplungselement nach Anspruch 13, wobei jede Drahtlitze einen Durchmesser im Bereich von 0,2 bis 0,5 mm aufweist.

15. Flexibles Rohrkupplungselement nach einem der vorangehenden Ansprüche, wobei die Strangelemente einen Winkel von 45° bis 75° relativ zur Länge des metallischen balgförmigen Elements bilden.

16. Flexibles Rohrkupplungselement nach einem der vorangehenden Ansprüche, das weiter ein spiralförmig gewickeltes Metall-Auskleidungselement (505) umfasst, das sich innerhalb des metallischen balgförmigen Elements befindet und in dieser Lage festgehalten ist.

17. Flexibles Rohrkupplungselement nach Anspruch 16, wobei das spiralförmig gewickelte Metall-Auskleidungselement (505) austenitischen Edelstahl eines der folgenden Typen umfasst:
BS EN 1.4301;
BS EN 1.4306;
BS EN 1.4401;
BS EN 1.4404;
BS EN 14571;
BS EN 1.4541;
BS EN 1.4828.

18. Flexibles Rohrkupplungselement nach Anspruch 16 oder 17, wobei das spiralförmig gewickelte Metall-Auskleidungselement (505) durch Befestigung am ersten und zweiten Ende des metallischen balgförmigen Elements durch Schweißen an Adapter-Zwischenrohre (503, 504), die dann durch Bördeln am ersten und zweiten Ende (204, 205) des metallischen balgförmigen Elements, an den äußeren Bunden (210) und am äußeren Metallgehäuseelement aus Metallgewebe (209) befestigt werden, in seiner Lage festgehalten wird.

19. Flexibles Rohrkupplungselement nach Anspruch 16 oder 17, wobei das spiralförmig gewickelte Metall-Auskleidungselement durch Befestigung am ersten und zweiten Ende des metallischen balgförmigen Elements durch direktes Bördeln zwischen den äußeren Bunden, dem ersten und zweiten Ende des metallischen balgförmigen Elements und dem äußeren Gehäuseelement aus Metallgewebe in seiner Lage festgehalten wird.

20. Flexibles Rohrkupplungselement nach Anspruch 16 oder 17, wobei das spiralförmige Metall-Auskleidungselement durch eine Kombination der Folgenden in seiner Lage festgehalten wird:
durch Schweißen an Adapter-Zwischenrohre (503, 504), die dann durch Bördeln am ersten und zweiten Ende des metallischen balgförmigen Elements (204, 205), am äußeren Gehäuseelement aus Metallgewebe (209) und an den äußeren Bunden (210) befestigt werden;
durch direktes Bördeln zwischen den äußeren Bunden (210), dem ersten und zweiten Ende des metallischen balgförmigen Elements (204, 205) und dem äußeren Gehäuseelement aus Metallgewebe (209).

21. Flexibles Rohrkupplungselement nach einem der vorangehenden Ansprüche, wobei die äußeren Bunde (210) austenitischen Edelstahl eines der folgenden Typen umfassen:
BS EN 1.4301;
BS EN 1.4306;
BS EN 14401;
BS EN 1.4404;
BS EN 1.4571;
BS EN 1.4541;
BS EN 1.4828.

22. Flexibles Rohrkupplungselement nach einem der vorangehenden Ansprüche, wobei die äußeren Bunde (210) ferritischen Edelstahl umfassen.

23. Flexibles Rohrkupplungselement nach einem der vorangehenden Ansprüche, das eine Region des Balgs umfasst, die eine Region von Wellen (208) mit einem relativ kleineren Außendurchmesser aufweist, wobei diese Region zwischen dem Paar Regionen des Balgs angeordnet ist, die jeweils Wellen (207) mit relativ größerem Außenmaß aufweisen.

24. Flexibles Rohrkupplungselement nach Anspruch 23, wobei unter Bedingungen mit veränderlicher Belastung das äußere Gehäuseelement aus Metallgewebe (209) so wirkt, dass es sich in und aus einem Zustand bewegt, in dem es eine Oberfläche der Wellen mit relativ kleinerem Außendurchmesser berührt.

25. Flexibles Rohrkupplungselement nach Anspruch 23 oder 24, wobei das Balgelement eine Vielheit im Wesentlichen ringförmiger Wellen umfasst.

26. Flexibles Rohrkupplungselement nach einem der Ansprüche 23 bis 25, das so wirkt, dass sich unter dem zweiten Spannungszustand die äußere Hülse um die zweite Gruppe von Wellen mit relativ reduziertem Außendurchmesser verengt, so dass zwischen einer Innenfläche der äußeren Hülse und einer Außenfläche der zweiten Gruppe von Wellen mit relativ reduziertem Außendurchmesser Kontakt besteht.

27. Flexibles Rohrkupplungselement nach einem der vorangehenden Ansprüche, **dadurch gekennzeichnet, dass** die Auspuffkupplung so wirkt, dass:
unter einem ersten entlang einer Hauptlänge der Auspuffkupplung aufgebrachten Lastbereich (401) sich die Auspuffkupplung mit einer ersten Ausdehnungsgeschwindigkeit ausdehnt;
unter einem zweiten Lastbereich (402), der höher ist als der erste Lastbereich, sich die Auspuffkupplung mit einer zweiten Ausdehnungsgeschwindigkeit ausdehnt, wobei die zweite Ausdehnungsgeschwindigkeit gegenüber der ersten Ausdehnungsgeschwindigkeit reduziert ist; und
unter einem dritten Lastbereich (403), der höher ist als der erste und der zweite Lastbereich, sich die Kupplung mit einer dritten Ausdehnungsgeschwindigkeit ausdehnt, wobei die dritte Ausdehnungsgeschwindigkeit niedriger ist als die erste und die zweite Ausdehnungsgeschwindigkeit.

28. Flexibles Rohrkupplungselement nach Anspruch 27, wobei eine Änderungsgeschwindigkeit der zweiten Ausdehnungsgeschwindigkeit zwischen der ersten Ausdehnungsgeschwindigkeit und der zweiten Ausdehnungsgeschwindigkeit liegt und eine allmählich abnehmende Ausdehnungsgeschwindigkeit liefert, die bis zu einem Sperrzustand gleichmäßig abfällt.

29. Verbrennungsmotor, der ein flexibles Rohrkupplungselement nach einem der vorangehenden Ansprüche umfasst.

## Revendications

1. Accouplement tubulaire flexible pour un système d'échappement de véhicule automobile comprenant :
un élément métallique en forme de soufflet (202, 500) comportant un tronçon en longueur, ainsi qu'une première extrémité (204) et une deuxième extrémité (205);
une enveloppe extérieure métallique tissée (209) attachée sur le soufflet métallique essentiellement au niveau des première et deuxième extrémités, cette enveloppe extérieure métallique tissée comprenant plusieurs éléments tressés;
une pluralité d'ondulations (206, 207) s'étendant le long d'un tronçon en longueur de l'élément métallique en forme de soufflet;
**caractérisé en ce que** la pluralité d'ondulations comporte:
une première région d'ondulations de dimension extérieure relativement réduite placée à une extrémité de l'élément métallique en forme de soufflet;
une deuxième région d'ondulations de diamètre extérieur relativement réduit (208), ces ondulations de diamètre extérieur relativement réduit se trouvant essentiellement perpendiculaires au sens de la longueur de l'élément métallique en forme de soufflet;
**caractérisée en ce que** la deuxième région d'ondulations de diamètre relativement réduit est placée le long de l'élément métallique en forme de soufflet mais non pas à la première extrémité (204) ni à la deuxième extrémité (205);
une première région d'ondulations de dimension extérieure relativement plus grande;
une deuxième région d'ondulations de dimension extérieure relativement plus grande;
**caractérisée en ce que** l'enveloppe extérieure tissée, lorsqu'elle est mise sous tension, est capable de se contracter autour de l'élément en forme de soufflet de manière à s'adapter de très près autour de la deuxième région d'ondulations de diamètre relativement plus petit et autour des régions d'ondulations de dimension extérieure relativement plus grande; et
qui permet, en présence d'un premier niveau de tension, à l'enveloppe extérieure tissée de se contracter autour des première et deuxième régions d'ondulations de dimension extérieure relativement plus grande, tout en laissant un intervalle entre la deuxième région d'ondulations de diamètre relativement réduit et l'enveloppe extérieure tissée; et
en présence d'un deuxième niveau de tension, l'enveloppe extérieure tissée se contracte autour des première et deuxième régions d'ondulations de dimension extérieure relativement plus grande et se contracte par ailleurs pour prendre une dimension qui est inférieure à la dimension extérieure des première et/ou deuxième régions d'ondulations de dimension extérieure relativement plus grande.

2. Accouplement tubulaire flexible selon la revendication 1, **caractérisé en ce que** l'enveloppe extérieure métallique tissée (209) est essentiellement attachée sur les première et deuxième extrémités de l'élément métallique en forme de soufflet par sertissage entre des colliers extérieurs (210) et les première et deuxième extrémités (204, 205) de l'élément métallique en forme de soufflet.

3. Accouplement tubulaire flexible selon la revendication 1, **caractérisé en ce que** l'enveloppe extérieure métallique tissée (209) est essentiellement attachée sur les première et deuxième extrémités (204, 205) de l'élément métallique en forme de soufflet par soudage de l'enveloppe extérieure métallique tissée sur les première et deuxième extrémités de l'élément métallique en forme de soufflet.

4. Accouplement tubulaire flexible selon la revendication 1, **caractérisé en ce que** !'enveloppe extérieure métallique tissée est essentiellement attachée sur les première et deuxième extrémités de l'élément métallique en forme de soufflet par une combinaison des deux méthodes suivantes :
le sertissage entre des colliers extérieurs (210) et les première et deuxième extrémités de l'élément métallique en forme de soufflet;
le soudage de l'enveloppe extérieure métallique tissée (209) aux première et deuxième extrémités de l'élément métallique en forme de soufflet.

5. Accouplement tubulaire flexible selon l'une quelconque des revendications précédentes, **caractérisé en ce que** l'élément métallique en forme de soufflet (202, 500) est fabriqué en acier austénitique inoxydable.

6. Accouplement tubulaire flexible selon l'une quelconque des revendications précédentes, **caractérisé en ce que** l'élément métallique en forme de soufflet (202, 500) est fabriqué en acier austénitique inoxydable de l'un quelconque des types suivants :
BS EN 1.4301;
BS EN 1.4306;
BS EN 1.4401;
BS EN 1.4404;
BS EN 1.4571;
BS EN 1.4541;
BS EN 1.4828.

7. Accouplement tubulaire flexible selon les revendications 1 à 4, **caractérisé en ce que** l'élément métallique en forme de soufflet (202, 500) est fabriqué en alliages d'acier inoxydable à base de nickel.

8. Accouplement tubulaire flexible selon la revendication 7, **caractérisé en ce que** l'élément métallique en forme de soufflet (202, 500) est fabriqué en alliages d'acier inoxydable à haute teneur en nickel de l'un quelconque des types suivants :
UNS N 08800;
UNS N 06600;
UNS N 06625;
UNS S 35135.

9. Accouplement tubulaire flexible selon l'une quelconque des revendications précédentes, **caractérisé en ce que** l'enveloppe extérieure métallique tissée (209) est fabriquée en acier austénitique inoxydable de l'un quelconque des types suivants :
BS EN 1.4301;
BS EN 1.4306;
BS EN 1.4401;
BS EN 1.4.04;
BS EN 1.4571;
BS EN 1.4541;
BS EN 1.4828.

10. Accouplement tubulaire flexible selon l'une quelconque des revendications précédentes, **caractérisé en ce que** l'élément métallique en forme de soufflet (202, 500) comporte une pluralité de toiles, dont le nombre est compris entre 1 et 4.

11. Accouplement tubulaire flexible selon la revendication 7, **caractérisé en ce que** chaque toile est d'une épaisseur comprise entre 0,15 et 0,40 mm.

12. Accouplement tubulaire flexible selon l'une quelconque des revendications précédentes, **caractérisé en ce que** chaque élément tressé comprend 45 à 50 bandes de fils métalliques tissés ensemble de manière hélicoïdale.

13. Accouplement tubulaire flexible selon la revendication 12, **caractérisé en ce que** chaque bande comprend 3 à 12 torons métalliques individuels.

14. Accouplement tubulaire flexible selon la revendication 13, **caractérisé en ce que** chaque toron métallique est d'un diamètre compris entre 0,2 et 0,5 mm.

15. Accouplement tubulaire flexible selon l'une quelconque des revendications précédentes, **caractérisé en ce que** les éléments tressés sont disposés à un angle compris entre 45° et 75° par rapport au tronçon en longueur de l'élément métallique en forme de soufflet.

16. Accouplement tubulaire flexible selon l'une quelconque des revendications précédentes, comportant par ailleurs, un manchon métallique (505) enroulé de manière hélicoïdale à l'intérieur de l'élément métallique en forme de soufflet, et fixé dans cette position.

17. Accouplement tubulaire flexible selon la revendication 16, **caractérisé en ce que** le manchon métallique (505) enroulé de manière hélicoïdale est fabriqué en acier austénitique inoxydable de l'un quelconque des types suivants :
BS EN 1.4301;
BS EN 1.4306;
BS EN 1.4401;
BS EN 1.4404;
BS EN 1.4571;
BS EN 1.4541;
BS EN 1.4828.

18. Accouplement tubulaire flexible selon la revendication 16 ou la revendication 17, **caractérisé en ce que** le manchon métallique enroulé de manière hélicoïdale (505) est fixé en place en étant attaché sur les première et deuxième extrémités de l'élément métallique en forme de soufflet par soudage sur des tubes d'adaptation intermédiaires (503, 504) qui, eux, sont ensuite attachés par sertissage sur les première et deuxième extrémités (204, 205) de l'élément métallique en forme de soufflet, et aussi sur les colliers extérieurs (210) et sur l'enveloppe extérieure métallique tissée (209).

19. Accouplement tubulaire flexible selon la revendication 16 ou la revendication 17, **caractérisé en ce que** le manchon métallique enroulé de manière hélicoïdale est fixé en place en étant attaché sur les première et deuxième extrémités de l'élément métallique en forme de soufflet par sertissage direct entre les colliers extérieurs, et aussi sur les première et deuxième extrémités de l'élément métallique en forme de soufflet et sur l'enveloppe extérieure métallique tissée.

20. Accouplement tubulaire flexible selon la revendication 16 ou la revendication 17, **caractérisé en ce que** le manchon métallique enroulé de manière hélicoïdale est fixé en place par une combinaison des deux méthodes suivantes :
le soudage sur des tubes d'adaptation intermédiaires (503, 504) qui sont par la suite attachés par sertissage sur les première et deuxième extrémités (204, 205) de l'élément métallique en forme de soufflet, et aussi sur l'enveloppe extérieure métallique tissée (209) et les colliers extérieurs (210);
le sertissage direct entre les colliers extérieurs (210), et aussi sur les première et deuxième extrémités (204, 205) de l'élément métallique en forme de soufflet et sur l'enveloppe extérieure métallique tissée (209).

21. Accouplement tubulaire flexible selon l'une quelconque des revendications précédentes, **caractérisé en ce que** les colliers extérieurs (210) sont fabriqués en acier austénitique inoxydable de l'un quelconque des types suivants :
BS EN 1.4301;
BS EN 1.4306;
BS EN 1.4401;
BS EN 1.4404;
BS EN 1.4571;
BS EN 1.4541;
BS EN 1.4828.

22. Accouplement tubulaire flexible selon l'une quelconque des revendications précédentes, **caractérisé en ce que** les colliers extérieurs (210) sont fabriqués en acier inoxydable ferritique.

23. Accouplement tubulaire flexible selon l'une quelconque des revendications précédentes, comportant une partie du soufflet ayant une région d'ondulations (208) de diamètre extérieur relativement plus petit, cette région se trouvant disposée entre les deux régions du soufflet ayant chacune des ondulations (207) de dimension extérieure relativement plus grande.

24. Accouplement tubulaire flexible selon la revendication 23, **caractérisé en ce que,** dans des conditions de charge variable, l'enveloppe extérieure métallique tissée (209) se déplace de manière à se mettre en contact avec une surface d'ondulations de diamètre extérieur relativement plus petit, puis à s'en séparer.

25. Accouplement tubulaire flexible selon la revendication 23 ou la revendication 24, **caractérisé en ce que** le soufflet comprend une pluralité d'ondulations essentiellement annulaires.

26. Accouplement tubulaire flexible selon l'une quelconque des revendications 23 à 25, utilisé de manière à ce que, sous l'effet du deuxième niveau de tension, le manchon extérieur se contracte autour du deuxième ensemble d'ondulations de diamètre extérieur relativement plus petit, de manière à ce qu'il y ait contact entre une surface interne du manchon extérieur et une surface externe du deuxième ensemble d'ondulations de diamètre extérieur relativement réduit.

27. Accouplement tubulaire flexible selon l'une quelconque des revendications précédentes, **caractérisé en ce que** l'accouplement d'échappement est utilisé de manière à ce que :
sous l'effet d'une première plage (401) de charges appliquées le long d'un tronçon principal en longueur de l'accouplement d'échappement, cet accouplement d'échappement s'allonge avec un premier taux d'allongement;
sous l'effet d'une deuxième plage (402) de charges, plus importantes que celles de la première plage, l'accouplement d'échappement s'allonge avec un deuxième taux d'allongement, ce deuxième taux d'allongement étant inférieur au premier taux d'allongement; et
sous l'effet d'une troisième plage (403) de charges, plus importantes que celles de la première ou de la deuxième plage, l'accouplement d'échappement s'allonge avec un troisième taux d'allongement, ce troisième taux d'allongement étant inférieur au premier et au deuxième taux d'allongement.

28. Accouplement tubulaire flexible selon la revendication 27, **caractérisé en ce que** le taux de variation du deuxième taux d'allongement est compris entre le premier taux d'allongement et le deuxième taux d'allongement, et il en résulte un taux d'allongement qui diminue progressivement jusqu'à un état de blocage.

29. Moteur à combustion interne, comportant un accouplement tubulaire flexible selon l'une quelconque des revendications précédentes.
